(19) Europäisches Patentamt
European Patent Office
Office européen des brevets

(11) **EP 1 750 227 B1**

(12) **FASCICULE DE BREVET EUROPEEN**

(45) Date de publication et mention de la délivrance du brevet:
**08.07.2015 Bulletin 2015/28**

(51) Int Cl.:
**G06T 7/00** (2006.01)

(21) Numéro de dépôt: **06291255.5**

(22) Date de dépôt: **02.08.2006**

(54) **Procédé et système embarqué de reconstruction panoramique automatique**

Verfahren und eingebettetes System zur automatischen Panoramarekonstruktion

Process and embedded system for automatic panorama reconstruction

(84) Etats contractants désignés:
**DE ES GB IT**

(30) Priorité: **02.08.2005 FR 0508250**
**17.08.2005 FR 0508583**

(43) Date de publication de la demande:
**07.02.2007 Bulletin 2007/06**

(73) Titulaire: **Sagemcom Documents SAS**
**92500 Rueil Malmaison (FR)**

(72) Inventeurs:
• **Chevalier, Clément**
**75012 Paris (FR)**
• **Berger, Jérôme**
**92400 Courbevoie (FR)**

(74) Mandataire: **Debay, Yves**
**Cabinet Debay**
**126 Elysée 2**
**78170 La Celle Saint Cloud (FR)**

(56) Documents cités:
• **SZELISKI R: "Image mosaicing for tele-reality applications" APPLICATIONS OF COMPUTER VISION, 1994., PROCEEDINGS OF THE SECOND IEEE WORKSHOP ON SARASOTA, FL, USA 5-7 DEC. 1994, LOS ALAMITOS, CA, USA,IEEE COMPUT. SOC, 5 décembre 1994 (1994-12-05), pages 44-53, XP010100086 ISBN: 0-8186-6410-X**
• **M. BROWN AND D. G. LOWE: "Recognising Panoramas" PROCEEDINGS OF THE 9TH INTERNATIONAL CONFERENCE ON COMPUTER VISION ICCV, [Online] 2003, pages 1218-1225, XP002378647 Nice, France Extrait de l'Internet: URL:www.cs.ubc.ca/~mbrown/papers/iccv2003.pdf> [extrait le 2006-04-25]**
• **RICHARD SZELISKI AND HEUNG-YEUNG SHUM: "Creating Full View Panoramic Image Mosaics and Environment Maps" PROCEEDINGS OF THE 24TH ANNUAL CONFERENCE ON COMPUTER GRAPHICS AND INTERACTIVE TECHNIQUES, [Online] 1997, pages 251-258, XP002378648 ACM Press / Addison-Wesley Publishing Co., New York, NY, USA ISBN: 0-89791-896-7 Extrait de l'Internet: URL:delivery.acm.org/10.1145/260000/258861 /p251-szeliski.pdf?key1=258861&key2=092189 5411&coll=GUIDE&dl=GUIDE&CFID=70128974& CFT OKEN=83924045> [extrait le 2006-04-25]**

**EP 1 750 227 B1**

**Description**

DOMAINE TECHNIQUE DE L'INVENTION

La présente invention s'applique au domaine du traitement électronique de données représentatives d'une image pour permettre un recouvrement de plusieurs photos prises à la main à l'aide d'un appareil numérique. La présente invention concerne plus particulièrement un procédé et un système embarqué de reconstruction panoramique automatique.

ARRIERE-PLAN TECHNOLOGIQUE DE L'INVENTION

Il est connu dans l'art antérieur d'assembler des images correspondant à des photographies numériques prises d'un même lieu dans différentes directions. Toutefois les méthodes utilisées requièrent la plupart du temps une intervention de l'utilisateur. D'autres solutions utilisent des algorithmes particulièrement complexes devant déterminer la manière de combiner les images deux à deux. Le temps de recherche des zones de recouvrement est particulièrement long (de l'ordre d'une minute) lorsqu'il faut réaliser un panoramique à 360°. De plus, cela nécessite la puissance de calcul d'un PC. Il existe donc un besoin pour simplifier les calculs pour la reconstruction panoramique à partir de plusieurs images.

Le document US 6 018 349 enseigne une méthode de construction de grandes mosaïques d'image de façon automatique utilisant un algorithme d'alignement d'un jeu d'images se recouvrant partiellement. Cependant, la méthode utilise des calculs complexes, ce qui représente un inconvénient pour implémenter à moindre coût une fonctionnalité de reconstruction panoramique dans un appareil numérique portatif, par exemple sur une puce électronique de type DSP (Digital Signal Processing).

Le document US 6 044 181 décrit une méthode de détermination de focale consistant à assembler des images se recouvrant partiellement dans une mosaïque par alignement sur un plan. Des transformations entre les zones de recouvrement d'une image à l'autre sont d'abord calculées et une focale de chaque image est calculée. Une détermination de focale entre deux images peut être déduite et une rotation reliant deux images peut être calculée. Une combinaison de la rotation calculée et de la détermination de focale permet alors de relier chaque image à un système de coordonnées 3D. Ce type de méthode exige des calculs longs, de sorte qu'elle est également difficile à implémenter dans un appareil numérique portatif.

Il est également connu dans l'art antérieur, par le document US 6 785 427, une méthode utilisant des pyramides de résolution multi-couches pour assembler à une première image une seconde image recouvrant partiellement la première image. Toutefois, ce type de méthode utilise un mode d'ajustement qui ne prend pas en compte la notion de perspective dans l'image, de sorte que des erreurs de transformation dues à la perspective sont observées dans l'image panoramique obtenue par reconstruction.

Des produits comme Autostich et Panorama maker (Arcsoft) sont également connus pour réaliser sur PC des assemblages de type panorama ou mosaïque à partir d'images numériques. Lors d'une réalisation automatique de l'assemblage, les points d'ancrage choisi dans les zones de recouvrement peuvent être inappropriés avec ce type de produits. Un autre reproche couramment fait à propos de ces produits est le fait que le panorama résultant perd généralement le piqué initial des photos sources : il est toujours plus flou. Ces produits ne prennent pas en compte les défauts de perspective ou en tout cas n'assurent pas un traitement automatique efficace de ces défauts.

Il existe donc un besoin pour obtenir des panoramas ou des mosaïques à partir de photos prises par un appareil portatif, par un calcul qui soit le plus simple possible pour pouvoir être embarqué sur l'appareil portatif, tout en restant extrêmement efficace : en particulier, il faut éviter lors de la reconstruction panoramique d'introduire des erreurs de perspective et de recollage.

Il est connu également, par le document Szeliski R : « Image mosaicing for tele-reality applications », Proceedings of the second IEEE Workshop on Sarasota, FL., USA 5-7 Dec. 1994, Los Alamitos, CA, USA, IEEE Comput Soc, pages 44-53, une méthode avec un calcul systématique pour estimer la profondeur, ce qui ralentit l'opération de calcul et/ou requiert des moyens de traitement plus importants et encombrants.

Il existe donc un besoin pour obtenir des panoramas ou des mosaïques à partir de photos prises par un appareil portatif, par un calcul qui soit le plus simple possible pour pouvoir être embarqué sur l'appareil portatif, tout en restant extrêmement efficace : en particulier, il faut éviter lors de la reconstruction panoramique d'introduire des erreurs de perspective et de recollage.

DESCRIPTION GENERALE DE L'INVENTION

La présente invention a pour but de pallier certains inconvénients de l'art antérieur en proposant un procédé de reconstruction panoramique automatique qui résout notamment les problèmes de prise en compte de la perspective et permet l'obtention rapide d'une image panoramique très fidèle à la réalité, sans apparition de défaut visuel.

A cet effet, l'invention concerne un procédé selon la revendication 1. Selon un procédé de reconstruction panoramique automatique d'une image de sortie composée de pixels à partir d'au moins deux images d'entrée numériques se recouvrant au moins partiellement, mis en oeuvre par un système de reconstruction panoramique automatique incluant un module d'appariement d'images numériques et un circuit de traitement pour transformer des données représentatives d'images d'entrée et fabriquer des données représentatives d'images de sortie, comportant une étape de sélection d'une zone commune de recouvrement entre deux images d'entrée, l'étape de sélection utilisant le module d'appariement d'images numériques pour sélectionner, parmi des données représentatives des deux images d'entrée, deux séries de données de travail représentatives des zones respectives de recouvrement, caractérisé en ce qu'il comprend une étape de détermination dans la zone commune de paires de pixels significatifs en correspondance sur chacune des deux images d'entrée, les pixels d'une paire de coordonnées de position respectives xl, yl et xk, yk représentant un même détail visuel dans la zone commune, et une étape de calcul utilisant le circuit de traitement pour :

- dans un premier temps, déterminer au moins une transformation de type matricielle entre les deux images d'entrée et déterminer une focale en vue du recollement, le circuit de traitement utilisant lesdites coordonnées de position respectives xl, yl et xk, yk pour déterminer la transformation de type matricielle ;
- dans un second temps, réaliser une correction d'erreurs de perspective en prenant en compte une composante de profondeur pour chacune des paires de pixels significatifs et en déterminant à nouveau ladite transformation de type matricielle;

le procédé comprenant également une étape d'assemblage par un recollage de type cylindrique après récupération d'un ensemble de pixels représentatifs d'une superposition des images d'entrée, ladite superposition étant déduite de la transformation de type matricielle déterminée lors de ladite étape de calcul, une étape de corrections d'erreurs de transition étant réalisée notamment dans la zone commune par le circuit de traitement.

Selon une autre particularité, l'étape de calcul utilise le circuit de traitement pour déterminer notamment une première matrice de transformation à appliquer au moins à la zone commune, l'étape de calcul comportant :

- a) une étape préalable de détermination d'une focale ;
- b) une étape de détermination, à partir de coordonnées de position xl, yl et xk, yk des pixels significatifs appariés et de la focale, d'une matrice intermédiaire solution du système d'équations :

$$\begin{bmatrix} xl \\ yl \\ 1 \end{bmatrix} = M \begin{bmatrix} xk \\ yk \\ 1 \end{bmatrix}$$

où $M = V_k R_k R_l^{-1} V_l^{-1}$, $R_k$ et $R_l$ étant des matrices de rotation 3*3 dépendant de 3 angles de rotation et V dépendant de la focale ;
- c) une étape d'estimation d'un critère d'erreur représentatif de différences calculées pour les pixels significatifs appariés entre des coordonnées déduites à l'aide de la matrice intermédiaire et des coordonnées du pixel apparié ;
- d) une étape de modification de la rotation par incrémentation de $R_k R_l^{-1}$;
- e) une étape d'itération des étapes b), c) et d) jusqu'à ce que le critère d'erreur soit minimisé pour obtenir une matrice intermédiaire optimisée ;

l'étape de calcul comprenant ensuite une étape de correction de perspective.

Selon une autre particularité, l'étape de correction de perspective utilise le circuit de traitement pour ajouter à chacun des pixels significatifs appariés une composante additionnelle de profondeur zk, zl, l'étape de correction de perspective comprenant :

- i) une étape de détermination préalable d'une valeur de composante zk, zl pour chacun des pixels significatifs appariés qui minimise ledit critère d'erreur en utilisant la matrice intermédiaire optimisée ;
- ii) une étape de détermination, à partir de coordonnées de position xl, yl, zl et xk, yk, zk des pixels significatifs appariés et de la focale, d'une seconde matrice intermédiaire Mpsolution du système d'équation :

$$\begin{bmatrix} xl \\ yl \\ zl \end{bmatrix} = Mp \begin{bmatrix} xk \\ yk \\ zk \end{bmatrix}$$

où la seconde matrice intermédiaire est du même type que la matrice intermédiaire ;

- iii) une étape d'estimation dudit critère d'erreur ;
- iv) une étape de modification de la rotation ;
- v) une étape d'itération des étapes i), ii), iii) et iv) jusqu'à ce que le critère d'erreur soit minimisé pour obtenir une matrice optimisée, formant une première matrice de transformation, ainsi que des indications de profondeurs zk, zl ;

le procédé comprenant en outre une étape d'assemblage incluant une projection, sur une portion d'un cylindre, de pixels obtenus par utilisation de la première matrice de transformation.

Ainsi, l'invention permet d'obtenir une précision plus grande sur les pixels grâce à la correction de perspective, tout en minimisant les étapes de calcul complexes par des calculs matriciels.

Selon une autre particularité, l'étape de calcul utilise le circuit de traitement pour déterminer une seconde matrice de transformation à appliquer au moins au reste des images d'entrée, l'étape de correction de perspective comprenant :

- une étape de détermination dans la zone commune d'un arrière-plan dans lequel les pixels ont des valeurs supérieures à 1 pour la composante additionnelle de profondeur zk, zl ;
- une étape d'itération des étapes ii) à v) en utilisant les valeurs de composante zk, zl obtenues à l'étape v) uniquement pour les pixels significatifs appariés dudit arrière-plan, pour obtenir la seconde matrice de transformation.

L'invention permet donc avantageusement de déceler les différentes plans et les erreurs de transformation dues à la perspective peuvent être efficacement limitées.

Un autre but de l'invention est de proposer un système automatique de reconstruction panoramique qui résout notamment les problèmes de prise en compte de la perspective et permet de réduire la complexité des calculs, tout en produisant une image panoramique très fidèle à la réalité, sans apparition de défaut visuel.

Ce but est atteint par un système selon la revendication 21. Selon un système de reconstruction panoramique automatique incluant un module d'appariement d'images numériques et un circuit de traitement pour transformer des données représentatives d'images d'entrée et fabriquer des données représentatives d'images de sortie, caractérisé en ce que le module d'appariement comprend des moyens de sélection d'images d'entrée et des moyens de sélection de zones d'image, le circuit de traitement comportant :

- des moyens pour déterminer dans la zone commune des paires de pixels significatifs en correspondance sur chacune des deux images d'entrée, les pixels d'une paire de coordonnées de position respectives xl, yl et xk, yk représentant un même détail visuel dans la zone commune ;
- un premier module de calcul pour déterminer notamment une première matrice de transformation à appliquer au moins à la zone commune, le premier module de calcul étant doté de moyens logiciels pour :

  o a) déterminer une focale ;
  o b) déterminer, à partir de coordonnées de position xl, yl et xk, yk des pixels significatifs appariés et de la focale, une première matrice intermédiaire solution du système d'équations :

$$\begin{bmatrix} xl \\ yl \\ 1 \end{bmatrix} = M \begin{bmatrix} xk \\ yk \\ 1 \end{bmatrix}$$

où $M = V_k\, R_k\, R_l^{-1}\, V_l^{-1}$ $R_k$ et $R_l$ étant des matrices de rotation 3*3 dépendant de 3 angles de rotation et V dépendant de la focale ;
  o c) estimer un critère d'erreur représentatif de différences calculées pour les pixels significatifs appariés entre des coordonnées déduites à l'aide de la matrice intermédiaire et des coordonnées du pixel apparié ;

o d) modifier la rotation par incrémentation de Rk $R_I^{-1}$ ;

o e) itérer les traitements b), c) et d) jusqu'à ce que le critère d'erreur soit minimisé pour obtenir une matrice intermédiaire optimisée ;

- un second module de calcul en liaison avec le premier module de calcul pour traiter des données de correction de perspective en ajoutant à chacun des pixels significatifs appariés une composante additionnelle de profondeur zk, zl, le second module de calcul étant doté de moyens logiciels pour :

o i) déterminer préalablement une valeur de composante zk, zl pour chacun des pixels significatifs appariés qui minimise ledit critère d'erreur en utilisant la matrice intermédiaire optimisée ;
o ii) déterminer, à partir de coordonnées de position xl, yl, zl et xk, yk, zl des pixels significatifs appariés et de la focale, une seconde matrice intermédiaire solution du système d'équations :

$$\begin{bmatrix} xl \\ yl \\ zl \end{bmatrix} = Mp \begin{bmatrix} xk \\ yk \\ zk \end{bmatrix}$$

où la seconde matrice intermédiaire est du même type que la première matrice intermédiaire ;
o iii) estimer ledit critère d'erreur ;
o iv) modifier la rotation ;
o v) itérer les traitements ii), iii) et iv) jusqu'à ce que le critère d'erreur soit minimisé pour obtenir une matrice optimisée, formant une première matrice de transformation, ainsi que des indications de profondeurs zk, zl ;

- des moyens d'assemblage pour calculer une projection sur une portion d'un cylindre, de pixels obtenus par utilisation de la première matrice de transformation.

## BREVE DESCRIPTION DES DESSINS

D'autres particularités et avantages de la présente invention apparaîtront plus clairement à la lecture de la description ci-après, faite en référence aux dessins annexés, dans lesquels :

- la figure 1 représente un logigramme de déroulement des étapes du processus selon un mode de réalisation l'invention ;
- la figure 2 représente un exemple de mode de réalisation d'un système de reconstruction panoramique automatique pour la mise en oeuvre du procédé de l'invention ;
- la figure 3 illustre, après la correction de perspective, la correction des défauts de transition apportée grâce à l'invention ;
- la figure 4 illustre une reconstruction de type mosaïque permise par le procédé de l'invention ;
- la figure 5 montre des zones à disparité de traitement pour la correction de perspective ;
- les figures 6A et 6B illustrent respectivement une image sans correction de perspective et une image avec correction de perspective selon l'invention.

## DESCRIPTION DES MODES DE REALISATION PREFERES DE L'INVENTION

L'invention propose un procédé se déroulant en plusieurs phases :

- détermination de la zone commune ;
- détection et appariement de points ou pixels significatifs ;
- transformation des images et détermination de la focale en vue du recollement ;
- correction des erreurs de perspective ;
- recollage cylindrique et corrections des erreurs de transition (luminance,..).

Le procédé de reconstruction panoramique automatique permet d'abord de détecter et apparier les points significatifs d'une zone de recouvrement de deux images, la zone commune (20) pouvant être identifiée par comparaison, par exemple à l'aide d'un algorithme de calcul de décalage entre les images (P1, P2) utilisant le domaine de Fourier ou méthode analogue.

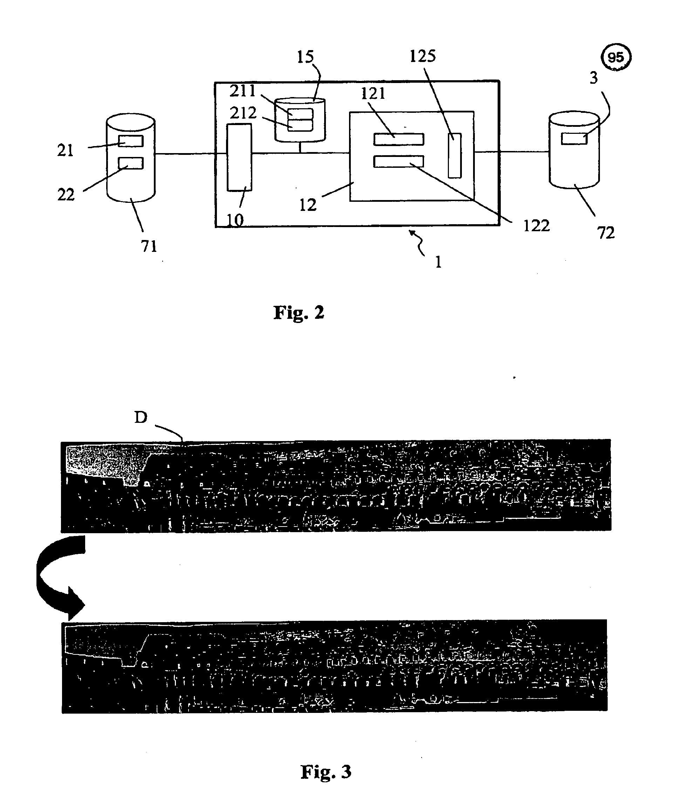

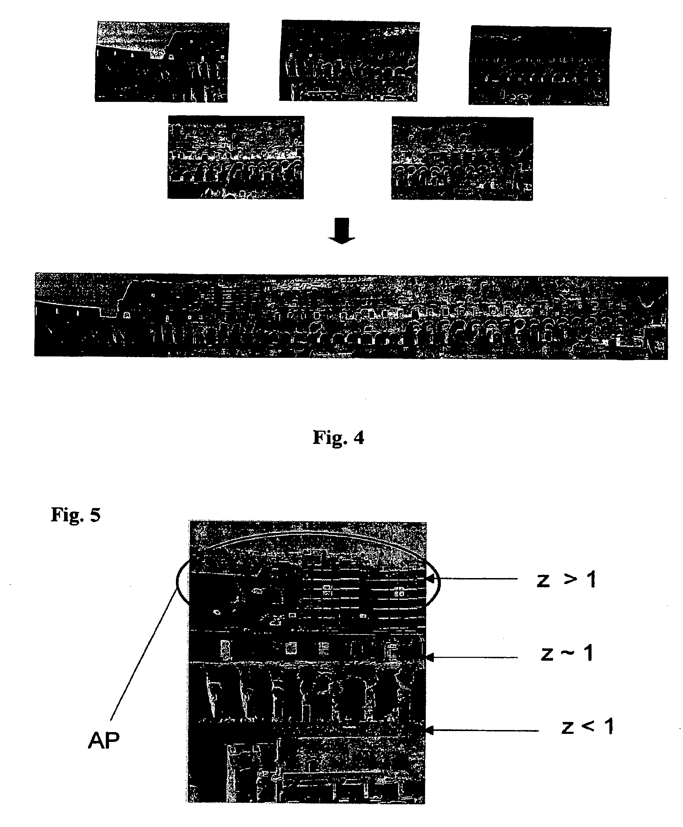

Le procédé vise à produire automatiquement une image panoramique de reconstruction établie à partir d'au moins deux images d'entrée (P1, P2). L'image de sortie composée de pixels est obtenue à partir d'au moins deux images d'entrée numériques (P1, P2) se recouvrant au moins partiellement. L'une ou l'autre, voire les deux images d'entrée (P1, P2) peuvent être elles-mêmes définies par des pixels transformés qui ont été obtenus lors d'un traitement incluant selon l'invention une étape (56) de correction de perspective. Comme illustré à la figure 4, le procédé selon l'invention est adaptable à la reconstruction mosaïque. En référence à la figure 2, le procédé selon l'invention est mis en oeuvre par un système (1) de reconstruction panoramique automatique. Ce système (1) comprend un module (10) d'appariement d'images numériques permettant de sélectionner des images d'entrée et des zones d'image. Le système (1) est également pourvu d'un circuit de traitement (12) pour transformer des données représentatives d'images d'entrée (21, 22) et fabriquer des données représentatives d'images de sortie (3).

Dans le mode de réalisation de la figure 2, le circuit de traitement (12) comprend des moyens pour déterminer dans la zone commune (20) des paires de pixels significatifs en correspondance sur chacune des deux images d'entrée (P1, P2). Les pixels d'une paire de coordonnées de position respectives xl, yl et xk, yk représentent un même détail visuel dans la zone commune (20). Le circuit de traitement (12) reçoit des données en provenance du module d'appariement (10), notamment des données de travail (211, 212) correspondant aux zones de recouvrement. Ces données de travail (211, 212) sont stockées dans une mémoire (15) à la disposition du circuit de traitement (12). Le module d'appariement (10) est relié à des moyens de stockage d'entrée (71) qui mémorisent des données (21, 22) représentatives des deux images d'entrée (P1, P2). Le circuit de traitement (12) est relié à des moyens de stockage de sortie (72) permettant de mémoriser des données (3) représentatives de la reconstruction panoramique.

Comme illustré à la figure 2, le circuit de traitement (12) est doté d'un premier module de calcul (121) pour déterminer notamment une première matrice (M1) de transformation à appliquer au moins à la zone commune (20). Un second module de calcul (122) du circuit de traitement (12), en liaison avec le premier module de calcul (121), permet de traiter des données de correction de perspective en ajoutant à chacun des pixels significatifs appariés obtenus une composante additionnelle de profondeur zk, zl. Dans un mode de réalisation préféré de l'invention, la composante additionnelle de profondeur zk, zl est déterminée autour d'une valeur de référence égale à 1. Le circuit de traitement (12) est doté en outre de moyens (125) d'assemblage pour calculer une projection, sur une portion d'un cylindre, de pixels obtenus par utilisation de la première matrice (M1) de transformation.

Le premier module de calcul (121) peut être agencé pour déterminer une seconde matrice (M2) de transformation à appliquer au moins au reste des images d'entrée (P1, P2). Ce second module de calcul (122) comprend par exemple des moyens pour déterminer dans la zone commune (20) un arrière-plan (AP) dans lequel les pixels ont des valeurs supérieures à 1 pour la composante additionnelle de profondeur zk, zl.

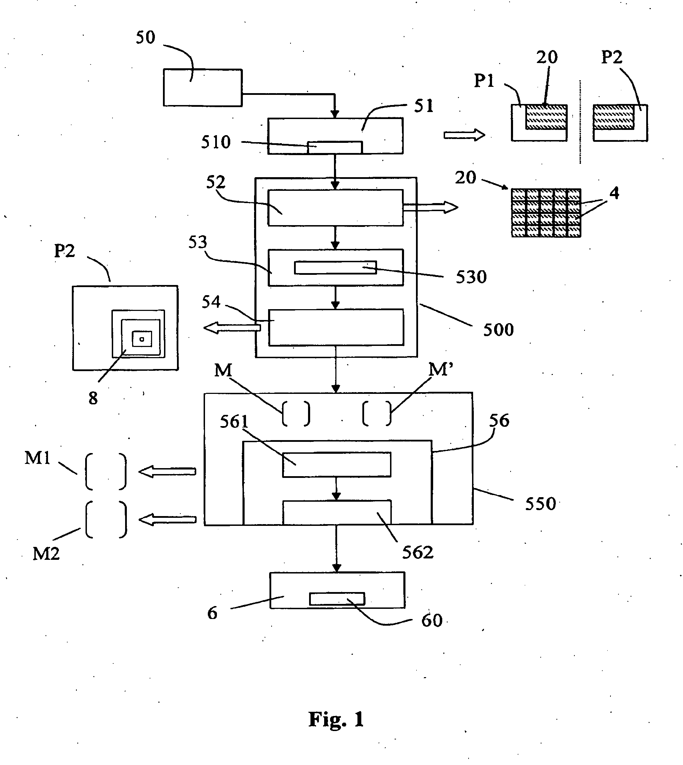

En référence avec la figure 1, le procédé selon l'invention comprend une étape (50) de sélection d'images à traiter comme des images d'entrée (P1, P2) permettant une reconstruction d'un panoramique. Ces images ont par exemple une zone de recouvrement correspondant à au moins 25% de l'image totale, de sorte qu'il est possible d'effectuer un assemblage d'images deux à deux. Une mosaïque peut être reconstituée en assemblant deux à deux les images voisines et en prenant un plan de référence.

Le procédé peut comporter une étape (51) de sélection d'une zone commune (20) de recouvrement entre deux images d'entrée (P1, P2). Cette étape de sélection (51) utilise le module (10) d'appariement d'images numériques pour sélectionner, parmi les données (21, 22) représentatives des images d'entrée (P1, P2), deux séries de données de travail (211, 212) représentatives des zones respectives de recouvrement. Le procédé comporte ensuite une étape (500) de détermination dans la zone commune (20) de paires de pixels significatifs en correspondance sur chacune des deux images d'entrée (P1, P2). Après l'étape de détermination (500) de paires de pixels significatifs, par détection préalable de pixels significatifs sur l'image de référence et une détermination des points correspondants sur l'autre image, le procédé se poursuit avec une étape (550) de calcul pour transformer des images et déterminer la focale en vue du recollement. Une matrice de transformation (méthode à 3 paramètres) est déterminée à l'aide des pixels appariés et la focale est déterminée. Puis une étape (56) de correction de la perspective est réalisée avec ajout d'un quatrième paramètre représentant la profondeur. Enfin, une étape (6) d'assemblage incluant une projection, sur une portion d'un cylindre, permet un recollage cylindrique. Ce recollage cylindrique, complété par une correction des erreurs de transition (luminance,...) permet de finaliser la reconstruction. Les éventuelles imperfections sont corrigées, notamment par un lissage partiel.

Dans un mode de réalisation de l'invention, une détermination du décalage général entre contours est réalisée pour estimer la zone commune où les contours associés aux mêmes objets coïncident. Chaque pixel d'une image est repéré par ses coordonnées (x, y) dans un repère xOy lié à l'image et dont l'origine est au centre du premier pixel analysé dans cette image. La luminance du pixel de coordonnées (x, y) est prise en compte et mémorisée.

Une étape (510) de calcul d'une information de décalage entre les deux images d'entrée (P1, P2) est réalisé par le circuit de traitement (12) après l'étape de sélection (51). Cette étape (510) de calcul peut consister à appliquer la transformation de Fourier discrète, à deux dimensions, à la zone commune (20) issue de la première image (P1) de référence et à la zone correspondante de la seconde image (P2). Cette seconde image (P2) a par exemple été traitée lors de l'étape (51) de sélection pour coïncider en partie avec la première image sur une zone commune (20) aux deux images d'entrée (P1, P2).

Dans un mode de réalisation préféré de l'invention, l'étape (510) de calcul de l'information de décalage comprend une méthode de corrélation de phase incluant un traitement des premières et secondes séries de données de travail (211, 212) par un passage dans le domaine de Fourier pour déterminer une matrice de corrélation puis un retour dans le domaine spatial des images pour déterminer un pic de corrélation. Pour une zone commune (20) de dimensions N*M pixels, un calcul d'un coefficient transformé, noté F (u,v), est effectué suivant une équation du type :

$$F(u,v) = \sum_{x=0}^{N-1} \sum_{y=0}^{M-1} f(x,y).\exp[-2j\pi.(x.u/N + y.v/M)]$$

Le graphe de la transformée de Fourier d'une image qui est représentée par N.M valeurs de luminance comporte N.M coefficients transformés F(u,v) et il peut être représenté par une surface ayant deux dimensions correspondant aux fréquences u et v, et ayant une troisième dimension correspondant au module des coefficients F(u,v). Pour visualiser ce graphe, il est possible de représenter au moins une courbe de niveau projetée sur le plan des fréquences (u, v). On se reportera par exemple, pour ce type de méthodologie, aux nombreux documents de référence notamment R.N. Bracewell, The Fourier Transforms and Its Applications, McGraw-Hill, New York, 1965.

L'étape (510) de calcul de l'information de décalage peut comprendre les étapes suivantes, effectuées par le circuit de traitement (12) :

- une première transformation de Fourier réalisée pour des données de pixels de la première série de données de travail (211) correspondant à la première image d'entrée (P1) ;
- une seconde transformation de Fourier, identique à la première transformation de Fourier, réalisée pour des données de pixels de la seconde série de données de travail (212) correspondant à la seconde image d'entrée (P1) ;
- un calcul de corrélation de phase pour déterminer des nombres complexes correspondant chacun à une position de pixel dans la zone commune (20) et obtenus par utilisation deux à deux des coefficients de Fourier obtenus lors desdites première et seconde transformations de Fourier ;
- une harmonisation de tous les modules des nombres complexes obtenus à une même valeur déterminée ;
- une transformation de Fourier inverse à partir des nombres complexes ayant leur module harmonisé pour obtenir un tableau de nombres réels ;
- une détection du nombre réel le plus élevé pour déterminer, à partir de coordonnées de position associées à ce nombre, le décalage entre les zones de recouvrement des images d'entrée (P1, P2).

L'obtention du décalage entre les images, sur les coordonnées x et y, fournit la translation à effectuer pour passer d'une zone de la première image (P1) à une zone correspondante de la seconde image (P2). Une fois la zone commune (20) identifié et le décalage estimé entre les zones de recouvrement, il faut chercher les poins significatifs les plus aisés à apparier. Dans l'exemple de la figure 1, l'étape 500) de détermination de paires de pixels significatifs comprend une première étape (53) de détection sur la première image (P1), dans la zone commune (20), d'une première série de pixels significatifs. Une étape (52) de répartition de la zone commune (20) en sous-zones (4) complémentaires peut aussi être effectuée par un traitement de la première série de données de travail (211). Cette étape (52) de répartition en sous-zones (4) comporte par exemple un traitement de la première série de données de travail (211) par le circuit de traitement (12) pour répartir des sous-groupes de données de travail représentatifs des sous-zones (4) de la zone commune (20).

La sélection pendant la première étape (53) de détection des pixels significatifs peut s'effectuer grâce à une étape (530) de comparaison réalisée par le circuit de traitement (12). Une matrice de calcul 2*2, représentative de caractéristiques d'intensité lumineuse au voisinage d'un pixel et tenant compte d'une éventuelle convolution par un filtre gaussien, est utilisée dans cette étape de comparaison (530) pour permettre de déterminer si la matrice de calcul possède deux valeurs propres supérieures chacune à un seuil déterminé.

Sur la première image d'entrée (P1), les pixels significatifs sont par exemple détectés, lors de la première étape (53) de détection, via une sélection dans plusieurs sous-groupe de données de travail, de données caractéristiques d'un pixel significatif. Ces données caractéristiques peuvent être identifiées en fonction de résultats fournis par un module détecteur de Harris du type agencé pour estimer un gradient d'intensité lumineuse au voisinage d'un pixel d'une image numérique.

L'opération de détection peut être décrite par la formule suivante :

$$E_{X,Y} = \sum_{u,v} w_{u,v} \left| I_{x+u,y+v} - I_{u,v} \right|^2$$

où $w_{u,v}$ représente un filtre gaussien et I une grandeur représentant l'intensité lumineuse.

$$\left| I_{x+u,y+v} - I_{u,v} \right|^2$$

peut se comprendre comme le carré du gradient

$$\begin{bmatrix} \left(\dfrac{\partial I}{\partial x}\right)^2 & \dfrac{\partial I}{\partial x}\dfrac{\partial I}{\partial y} \\[2ex] \dfrac{\partial I}{\partial x}\dfrac{\partial I}{\partial y} & \left(\dfrac{\partial I}{\partial y}\right)^2 \end{bmatrix}$$

de l'intensité lumineuse, puis s'écrire :

En tenant compte de la convolution par le filtre gaussien w, il est possible de réécrire l'opération de détection comme suit :

$$E_{X,Y} = (x,y)\begin{bmatrix} A & C \\ C & B \end{bmatrix}^{T}$$

*avec*

$$A = w \otimes \left(\frac{\partial I}{\partial x}\right)^2$$

$$B = w \otimes \left(\frac{\partial I}{\partial y}\right)^2$$

$$C = w \otimes \frac{\partial I}{\partial x}\frac{\partial I}{\partial y}$$

On peut donc travailler sur les valeurs propres de cette nouvelle matrice, ces valeurs propres étant notées $\alpha$ et $\beta$. Lorsque le pixel traité est dans une région lumineuse peu caractéristique, il y aura peu de variations et les valeurs de $\alpha$ et $\beta$ seront faibles. Si on rencontre une ligne, alors l'une seulement des valeurs propres sera importante. Si on rencontre un coin, cela se traduira par une forte variation dans toutes les directions, de sorte que les deux valeurs propres $\alpha$ et $\beta$ seront élevées. En appelant Det le déterminant de la nouvelle matrice et Tr la trace de la nouvelle matrice, il est permis de détecter des pixels significatifs (coins) dans la zone commune (20) de la première image (P1) en calculant le facteur R comme suit :

$$R = Det - k.\,Tr^2$$

$$R = \alpha\beta - k\,(\alpha + \beta)^2$$

avec par exemple k =0,4

Les pixels retenus correspondent alors à un summum du facteur R. Les pixels retenus sont répartis dans les sous-zones (4). Au moins un pixel significatif est détecté par exemple pour chaque sous-zone (4). Chacune des valeurs propres peut être comparée à un seuil déterminé permettant une détection, uniquement si les deux valeurs α et β dépassent les seuils.

En référence à la figure 1, l'étape (500) de détermination de paires de pixels significatifs comprend une étape (54) de détection sur la seconde image (P2) d'une seconde série de pixels significatifs en correspondance avec ladite première série de pixels détectés sur la première image (P1). Dans un mode de réalisation de l'invention, la seconde étape (54) de détection comporte une localisation par le circuit de traitement (12) de sous-zones de la seconde image (P2) par utilisation de l'information de décalage. La seconde étape (54) de détection comprend ensuite, pour chaque pixel significatif à apparier, au moins une étape de re-détermination du décalage via une méthode de corrélation de phase (par exemple analogue à la méthode susmentionnée utilisant le domaine de Fourier : algorithme dit de Shift Fourier) pour estimer une localisation du pixel à apparier dans une fenêtre rectangulaire (8) de dimensions inférieures à celles de la sous-zone correspondante. La fenêtre rectangulaire (8) de dimensions réduites est recentrée autour d'un pixel déduit à l'aide du décalage re-déterminé. L'étape de re-détermination du décalage est alors répétée jusqu'à l'obtention d'une stabilité du décalage permettant de déterminer la position du pixel à apparier.

Un critère de seuillage permet de corriger d'éventuelles imprécisions et d'éliminer les pixels présélectionnés dans la première d'image d'entrée qui ne s'apparient pas. Par exemple un pixel significatif détecté lors de la première étape (53) de détection est éliminé si une étape de re-détermination du décalage relève une variation de décalage supérieur à un seuil de décalage pendant la seconde étape (54) de détection. Ce seuil de décalage est par exemple de un ou deux pixels (décalage selon les coordonnées x ou y). L'avantage de la méthode de détection de paires de pixels significatifs est qu'elle est très précise et évite de se soucier des éventuels problèmes liés à une distorsion ou à une rotation (méthode plus rapide). L'élimination d'un pixel significatif détecté lors de la première étape (53) de détection peut être aussi prévue lorsqu'un critère de similitude ente les fenêtres montre que les différences sont trop importantes.

Une fois les pixels significatifs détectés, appariés et stockés dans une mémoire (15) à la disposition du circuit de traitement (12), ceux-ci peuvent servir à déterminer une première matrice (M1) de transformation permettant de déduire une zone de la seconde image (P2) d'une zone correspondante de la première image (P1). Cette première matrice (M1) de transformation est de type homographie plane et tient compte de la focale (distance entre le centre optique de l'objectif et l'image d'un objet situé à l'infini).

En référence à la figure 1, après l'étape (500) de détermination des paires de pixels significatifs, le procédé comporte une étape (550) de calcul utilisant le circuit de traitement (12) pour déterminer notamment la première matrice (M1) de transformation à appliquer au moins à la zone commune (20). Dans un mode de réalisation de l'invention, l'étape de calcul (550) comporte :

- a) une étape préalable de détermination d'une focale ;
- b) une étape de détermination, à partir de coordonnées de position xl, yl et xk, yk des pixels significatifs appariés et de la focale, d'une matrice intermédiaire (M) solution du système d'équations :

$$\begin{bmatrix} xl \\ yl \\ 1 \end{bmatrix} = M \begin{bmatrix} xk \\ yk \\ 1 \end{bmatrix}$$

où $M = V_k \ R_k \ R_l^{-1} V_l^{-1}$, $R_k$ et $R_l$ étant des matrices de rotation 3*3 dépendant de 3 angles de rotation et V dépendant de la focale ;

- c) une étape d'estimation d'un critère d'erreur représentatif de différences calculées pour les pixels significatifs appariés entre des coordonnées déduites à l'aide de la matrice intermédiaire (M) et des coordonnées du pixel apparié ;
- d) une étape de modification de la rotation par incrémentation de Rk Rl-1 ;
- e) une étape d'itération des étapes b), c) et d) jusqu'à ce que le critère d'erreur soit minimisé pour obtenir une matrice intermédiaire optimisée (M').

L'étape a) préalable de détermination de la focale débute en fixant la focale à une valeur initiale puis la matrice $M = V_k \ R_k \ R_l^{-1} V_l^{-1}$ est déterminée. Ce processus est itéré en faisant varier la focale et on choisit la focale qui minimise le critère d'erreur. Cette focale est exprimée en nombre de pixels.

Le critère d'erreur estimé lors de l'étape c) d'estimation est par exemple de type quadratique et peut s'écrire comme suit :

$$E(\Omega) = \sum_{k} \| \vec{x}''_{1k} - \vec{x}_{0k} \|^2$$

avec x'' et x représentant les positions respectives d'un pixel obtenu par transformation avec la première matrice intermédiaire (M) et d'un pixel de coordonnées idéales correspondant au pixel apparié.

Dans un mode de réalisation de l'invention, l'incrémentation pour parvenir à déterminer la matrice intermédiaire optimisée (M') peut être du type :

$$M = (I + D_\Omega)M$$

avec

$$D_\Omega = \begin{pmatrix} 0 & -\omega_z & f\omega_y \\ \omega_z & 0 & -f\omega_x \\ -\omega_y/f & \omega_x/f & 0 \end{pmatrix}$$

où $\Omega = \begin{bmatrix} wx \\ wy \\ wz \end{bmatrix}$ représente l'angle de rotation de la transformation.

En référence à la figure 1, l'étape de calcul (550) comprend, après l'obtention de la matrice intermédiaire optimisée (M'), une étape (56) de correction de perspective utilisant le circuit de traitement (12) pour ajouter à chacun des pixels significatifs appariés une composante additionnelle de profondeur zk, zl. L'étape (56) de correction de perspective comporte en particulier :

   - i) une étape de détermination préalable d'une valeur de composante zk, zl pour chacun des pixels significatifs appariés qui minimise ledit critère d'erreur en utilisant la matrice intermédiaire optimisée (M') ;
   - ii) une étape de détermination, à partir de coordonnées de position xl, yl, zl et xk, yk, zl des pixels significatifs appariés et de la focale, d'une nouvelle matrice intermédiaire (deuxième matrice intermédiaire) solution du système d'équations :

$$\begin{bmatrix} xl \\ yl \\ zl \end{bmatrix} = Mp \begin{bmatrix} xk \\ yk \\ zk \end{bmatrix}$$

où la deuxième matrice intermédiaire est du même type que la première matrice intermédiaire (M) ;
   - iii) une étape d'estimation dudit critère d'erreur ;
   - iv) une étape de modification de la rotation ;
   - v) une étape d'itération des étapes ii), iii) et iv) jusqu'à ce que le critère d'erreur soit minimisé pour obtenir une matrice optimisée, formant une première matrice (M1) de transformation, ainsi que des indications de profondeur zk, zl.

Ainsi, un quatrième paramètre qui représente la profondeur est introduit pour la détermination de la transformation. Chaque composante de profondeur ajoutée est normée autour de 1. L'intérêt de ce type de calcul pour obtenir des matrices (M1, M2) de transformation est d'utiliser uniquement un nombre restreint de pixels (les pixels significatifs appariés) pour déterminer le passage d'une image à l'autre, et ceci sans connaissances a priori des caractéristiques de l'image.

Dans l'exemple de la figure 1, l'étape (550) de calcul utilise le circuit de traitement (12) pour déterminer une seconde matrice (M2) de transformation à appliquer au moins au reste des images d'entrée (P1, P2). L'étape (56) de correction de perspective comprend alors :

- une étape (561) de détermination dans la zone commune (20), d'un arrière-plan (AP) dans lequel les pixels ont des valeurs supérieures à 1 pour la composante additionnelle de profondeur $z_k$, $z_l$ ; et
- une étape (562) d'itération des étapes ii) à v) en utilisant les valeurs de composante $z_k$, $z_l$ obtenues à l'étape v) uniquement pour les pixels significatifs appariés dudit arrière-plan (AP), pour obtenir la seconde matrice (M2) de transformation.
- On récupère ainsi les matrices de transformation suivantes :

- la première matrice M1(z) que l'on applique à l'intersection des deux images d'entrée (P1, P2) ;
- une matrice supplémentaire M(z=arrière-plan) que l'on applique sur l'extrémité de l'image, cette matrice supplémentaire donnant l'angle wz ;
- la seconde matrice M2(wz fixé) qui corrige l'effet de perspective.

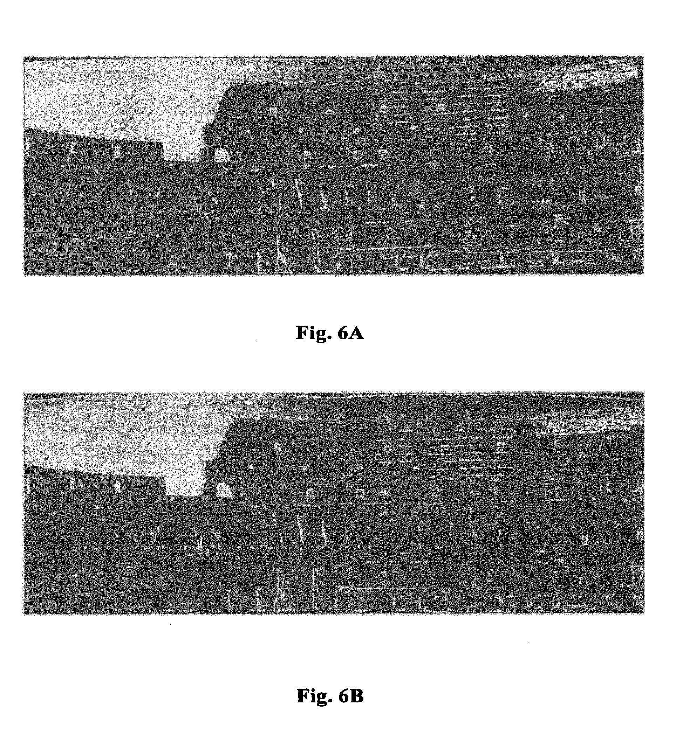

Une transition douce doit en outre être effectuées pour l'utilisation de ces deux matrices de transformation (M1, M2). L'apport de la correction de perspective par rapport à l'art antérieur est de permettre un bon alignement des lignes de fuite reconstituées à partir de plusieurs images. Ainsi les déformations, visibles notamment dans les panoramiques représentant des monuments, sont supprimées. La comparaison entre les figures 6A et 6B permet de montrer l'amélioration apportée pour une image traitée avec la correction de perspective (figure 6B) par rapport à une image non traitée (figure 6A). En outre, les défauts (D) de transition sont corrigés comme l'illustre la figure 3.

En référence à la figure 1, l'étape (6) d'assemblage comporte une projection, sur une portion d'un cylindre constituée d'un nombre déterminé de pixels, de trois ensembles distincts de pixels :

- un premier ensemble de pixels de la première image (P1) distinct de la zone commune (20), les pixels du premier ensemble étant par exemple obtenus par utilisation d'une transformation antérieure (ou le cas échéant par une matrice Identité) ;
- un deuxième ensemble de pixels correspondant à la zone commune (20) respectivement de la première image (P1) et de la seconde image (P2), les pixels du deuxième ensemble étant obtenus par utilisation de la première matrice (M1) de transformation ; et
- un troisième ensemble de pixels de la seconde image (P2) distinct de la zone commune (20), les pixels du troisième ensemble étant obtenus par utilisation de la seconde matrice (M2) de transformation.

La projection sur une portion de cylindre est une transformation simple qui donne l'illusion du panorama. L'étape d'assemblage (6) permet un recollage de type cylindrique après récupération d'un ensemble de pixels représentatifs d'une superposition des images d'entrée, ladite superposition étant déduite de la transformation de type matricielle déterminée lors de l'étape de calcul (550).

Une seule rotation (sur l'axe du cylindre qui est centré sur le photographe au moment de la prise des clichés) est utilisée pour cette projection connue en soi. Les détails de réalisation ne seront donc pas décrit ici de façon exhaustive puisque la projection elle-même est une opération arrivant à un stade ultérieur par rapport au traitement inédit de l'invention utilisé pour corriger les défauts de perspective. La portion de cylindre représentant le panorama est décrite pixel par pixel à l'aide de l'information de décalage entre les mages d'entrée (P1, P2), de la taille des images (P1, P2) et de la focale.

Dans l'exemple de la figure 2, une étape de lissage (60) est réalisée lors de l'étape (6) d'assemblage, pour atténuer la transition. Pour cela, le circuit de traitement (12) effectue, entre les limites opposées de la zone commune (20), une somme des pixels de chacune des images d'entrée (P1, P2). Lors de cette étape, une première pondération en arctangente, fonction de l'éloignement à la bordure de la zone commune sur la première image d'entrée (P1), est appliquée à la moitié du second ensemble de pixels qui est issue de la première image (P1). Une seconde pondération en arctangente, de croissance inversée par rapport à la première pondération, et fonction de l'éloignement à la bordure de la zone commune sur la seconde image d'entrée (P2), est appliquée à la moitié du second ensemble de pixels qui est issue de la seconde image (P1).

Une correction de la luminance par spécification d'histogramme (RGB) peut être utilisée conformément à une des méthodes connues. L'étape (6) d'assemblage comporte par exemple :

- une étape de calcul, pour chacune des zones de recouvrement de la première image d'entrée (P1) et de la seconde image d'entrée (P1), d'un opérateur d'égalisation d'histogramme respectif T1, T2 ;
- une étape de correction d'un paramètre de luminance des pixels dans la seconde image (P2), en appliquant à un histogramme associé à la seconde image (P2) la transformation T1-1 o T2.

L'utilisation des matrices de transformation peut être réalisée dans le cas de la reconstruction d'une mosaïque, à partir de deux images ou plus, comme représenté dans l'exemple de la figure 4, avec 5 images d'entrée. De manière cumulative, le traitement est effectué avec des images prises par paire. L'image centrale peut servir de plan de référence (c'est le cas de la troisième image dans l'exemple de la figure 4).

L'un des avantages de l'invention est de simplifier les calculs pour obtenir de façon automatique une image panoramique et de permettre d'intégrer le système (1) de reconstruction panoramique automatique dans un appareil numérique compact tel qu'un terminal radio mobile de format de poche.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de reconstruction panoramique automatique d'une image de sortie composée de pixels à partir d'au moins deux images d'entrée numériques (P1, P2) se recouvrant au moins partiellement, mis en oeuvre par un système (1) de reconstruction panoramique automatique incluant un module (10) d'appariement d'images numériques et un circuit de traitement (12) pour transformer des données représentatives d'images d'entrée (21, 22) et fabriquer des données représentatives d'images de sortie (3), comportant une étape (51) de sélection d'une zone commune (20) de recouvrement entre deux images d'entrée (P1, P2), dans laquelle on sélectionne, grâce au module (10) d'appariement d'images numériques, parmi des données (21, 22) représentatives des deux images d'entrée (P1, P2), deux séries de données de travail (211, 212) représentatives des zones respectives de recouvrement, l'étape de sélection (51) étant suivie d'une étape (500) de détermination dans la zone commune (20) de paires de pixels significatifs en correspondance sur chacune des deux images d'entrée (P1, P2), les pixels d'une paire de coordonnées de position respectives xl, yl et xk, yk représentant un même détail visuel dans la zone commune (20), le procédé comprenant une étape (550) de calcul utilisant le circuit de traitement (12), pour :

   - dans un premier temps, déterminer au moins une transformation de type matricielle entre les deux images d'entrée (P1, P2) et déterminer une focale en vue du recollement, lesdites coordonnées de position respectives xl, yl et xk, yk étant utilisées par le circuit de traitement (12) pour déterminer la transformation de type matricielle ;
   - dans un second temps, lors d'une étape (56) de correction de perspective, réaliser une correction d'erreurs de perspective en prenant en compte une composante de profondeur pour chacune des paires de pixels significatifs et en déterminant à nouveau ladite transformation de type matricielle;
   le procédé comprenant également une étape d'assemblage (6) par un recollage de type cylindrique après récupération d'un ensemble de pixels représentatifs d'une superposition des images d'entrée, ladite superposition étant déduite de la transformation de type matricielle déterminée lors de ladite étape de calcul (550), l'étape de calcul (550) utilisant le circuit de traitement (12) pour déterminer notamment une première matrice (M1) de transformation à appliquer au moins à la zone commune (20) et comprenant en outre une détermination par le circuit de traitement (12) d'une seconde matrice (M2) de transformation à appliquer au moins au reste des images d'entrée (P1, P2), l'étape (56) de correction de perspective comprenant une étape d'ajout à chacun des pixels significatifs appariés d'une composante additionnelle de profondeur zk, zl et une étape (561) de détermination dans la zone commune (20) d'un arrière-plan (AP) dans lequel les pixels ont des valeurs supérieures à 1 pour la composante additionnelle de profondeur zk, zl.

2. Procédé selon la revendication 1, dans lequel une étape de corrections d'erreurs de transition est réalisée notamment dans la zone commune (20) par le circuit de traitement (12).

3. Procédé selon la revendication 1 ou 2, dans lequel l'étape de calcul (550) comporte :

   - a) une étape préalable de détermination d'une focale ;
   - b) une étape de détermination, à partir de coordonnées de position xl, yl et xk, yk des pixels significatifs appariés et de la focale, d'une première matrice intermédiaire (M) solution du système d'équations :

$$\begin{bmatrix} xl \\ yl \\ 1 \end{bmatrix} = M \begin{bmatrix} xk \\ yk \\ 1 \end{bmatrix}$$

où $M = V_k R_k R_l^{-1} V_l^{-1}$, $R_k$ et $R_l$ étant des matrices de rotation 3*3 dépendant de 3 angles de rotation et V dépendant de la focale ;

- c) une étape d'estimation d'un critère d'erreur représentatif de différences calculées pour les pixels significatifs appariés entre des coordonnées déduites à l'aide de la matrice intermédiaire (M) et des coordonnées du pixel apparié ;
- d) une étape de modification de la rotation par incrémentation de $R_k R_l^{-1}$ ;
- e) une étape d'itération des étapes b), c) et d) jusqu'à ce que le critère d'erreur soit minimisé pour obtenir une matrice intermédiaire optimisée (M') ;

**4.** Procédé selon la revendication 3, dans lequel l'étape de correction de perspective comprend :

- i) une étape de détermination préalable d'une valeur de composante zk, zl pour chacun des pixels significatifs appariés qui minimise ledit critère d'erreur en utilisant la matrice intermédiaire optimisée (M') ;
- ii) une étape de détermination, à partir de coordonnées de position xl, yl, zl et xk, yk, zk des pixels significatifs appariés et de la focale, d'une seconde matrice intermédiaire Mp solution du système d'équations :

$$\begin{bmatrix} xl \\ yl \\ zl \end{bmatrix} = Mp \begin{bmatrix} xk \\ yk \\ zk \end{bmatrix}$$

où la seconde matrice intermédiaire est du même type que la première matrice intermédiaire (M) ;
- iii) une étape d'estimation dudit critère d'erreur ;
- iv) une étape de modification de la rotation ;
- v) une étape d'itération des étapes ii), iii) et iv) jusqu'à ce que le critère d'erreur soit minimisé pour obtenir une matrice optimisée, formant ladite première matrice (M1) de transformation, ainsi que des indications de profondeurs zk, zl ;
le procédé comprenant en outre une étape (6) d'assemblage incluant une projection, sur une portion d'un cylindre, de pixels obtenus par utilisation de la première matrice (M1) de transformation.

**5.** Procédé selon la revendication 4, dans lequel l'étape (56) de correction de perspective comprend:

- une étape (562) d'itération des étapes ii) à v) en utilisant les valeurs de composante zk, zl obtenues à l'étape v) uniquement pour les pixels significatifs appariés dudit arrière-plan (AP), pour obtenir la seconde matrice (M2) de transformation.

**6.** Procédé selon une des revendications 1 à 5, comprenant une étape (510) de calcul d'une information de décalage entre les deux images d'entrée (P1, P2) réalisée par le circuit de traitement (12) après l'étape de sélection (51), ladite étape (500) de détermination de paires de pixels significatifs comprenant :

- une étape (52) de répartition de la zone commune (20) en sous-zones (4) complémentaires par un traitement de la première série de données de travail (211) ;
- une première étape (53) de détection sur la première image (P1), dans la zone commune (20), d'une première série de pixels significatifs répartis dans les sous-zones (4) et une seconde étape (54) de détection sur la seconde image (P2) d'une seconde série de pixels significatifs en correspondance avec ladite première série, la seconde étape (54) de détection incluant une localisation par le circuit de traitement (12) de sous-zones de la seconde image (P2) par utilisation de l'information de décalage.

**7.** Procédé selon la revendication 6, dans lequel l'étape (52) de répartition en sous-zones (4) comporte un traitement de la première série de données de travail (211) par le circuit de traitement (12) pour répartir des sous-groupes de données de travail représentatifs des sous-zones (4) de la zone commune (20).

**8.** Procédé selon la revendication 7, dans lequel la première étape (53) de détection comprend une sélection, dans chaque sous-groupe de données de travail, de données caractéristiques d'un pixel significatif, en fonction de résultats fournis par un module détecteur de Harris du type agencé pour estimer un gradient d'intensité lumineuse au voisinage d'un pixel d'une image numérique.

**9.** Procédé selon une des revendications 3 à 8, dans lequel le critère d'erreur estimé lors de l'étape c) d'estimation est de type quadratique.

**10.** Procédé selon une des revendications 6 à 9, dans lequel l'étape (510) de calcul d'une information de décalage comprend une méthode de corrélation de phase incluant un traitement des premières et secondes séries de données de travail (211, 212) par un passage dans le domaine de Fourier pour déterminer une matrice de corrélation puis un retour dans le domaine spatial des images pour déterminer un pic de corrélation.

**11.** Procédé selon la revendication 10, dans lequel l'étape (510) de calcul d'une information de décalage comprend les étapes suivantes effectuées par le circuit de traitement (12) :

- une première transformation de Fourier réalisée pour des données de pixels de la première série de données de travail (211) correspondant à la première image d'entrée (P1) ;
- une seconde transformation de Fourier, identique à la première transformation de Fourier, réalisée pour des données de pixels de la seconde série de données de travail (212) correspondant à la seconde image d'entrée (P2) ;
- un calcul de corrélation de phase pour déterminer des nombres complexes correspondant chacun à une position de pixel dans la zone commune (20) et obtenus par utilisation deux à deux des coefficients de Fourier obtenus lors desdites première et seconde transformations de Fourier ;
- une harmonisation de tous les modules des nombres complexes obtenus à une même valeur déterminée ;
- une transformation de Fourier inverse à partir des nombres complexes ayant leur module harmonisé pour obtenir un tableau de nombres réels ;
- une détection du nombre réel le plus élevé pour déterminer, à partir de coordonnées de position associées à ce nombre, le décalage entre les zones de recouvrement des images d'entrée (P1, P2).

**12.** Procédé selon une des revendications 6 à 11, dans lequel des pixels significatifs sont sélectionnées pendant la première étape (53) de détection lors d'une étape (530) de comparaison réalisée par le circuit de traitement (12) et utilisant une matrice de calcul 2*2, représentative de caractéristiques d'intensité lumineuse au voisinage d'un pixel et tenant compte d'une éventuelle convolution par un filtre gaussien, l'étape de comparaison (530) permettant de déterminer si la matrice de calcul possède deux valeurs propres supérieures chacune à un seuil déterminé.

**13.** Procédé selon la revendication 12, dans lequel la seconde étape (54) de détection comprend, après la localisation des sous-zones de la seconde image (P2), pour chaque pixel significatif à apparier; au moins une étape de re-détermination du décalage via une méthode de corrélation de phase pour estimer une localisation du pixel à apparier dans une fenêtre rectangulaire (8) de dimensions inférieures à celles de la sous-zone correspondante et recentrée autour d'un pixel déduit à l'aide du décalage re-déterminé, l'étape de re-détermination du décalage étant répétée jusqu'à l'obtention d'une stabilité du décalage permettant de déterminer la position du pixel à apparier.

**14.** Procédé selon la revendication 13, dans lequel un pixel significatif détecté lors de la première étape (53) de détection est éliminé si une étape de re-détermination du décalage relève une variation de décalage supérieur à un seuil de décalage pendant la seconde étape (54) de détection.

**15.** Procédé selon une des revendications 3 à 14, dans lequel l'étape a) préalable de détermination de la focale comprend :

- une étape de fixation de la focale à une valeur initiale ;
- une étape de détermination de la matrice $M = V_k\, R_k\, R_l^{-1} V_l^{-1}$;
- un itération des deux étapes précédentes en faisant varier la focale jusqu'à minimiser le critère d'erreur.

**16.** Procédé selon une des revendications 1 à 12, dans lequel l'étape (6) d'assemblage comporte une projection, sur une portion d'un cylindre constituée d'un nombre déterminé de pixels, de trois ensembles de pixels :

- un premier ensemble de pixels de la première image (P1) distinct de la zone commune (20) ;
- un deuxième ensemble de pixels correspondant à la zone commune (20) respectivement de la première image (P1) et de la seconde image (P2), les pixels du deuxième ensemble étant obtenus par utilisation de la première matrice (M1) de transformation ; et
- un troisième ensemble de pixels de la seconde image (P2) distinct de la zone commune (20), les pixels du troisième ensemble étant obtenus par utilisation de la seconde matrice (M2) de transformation.

**17.** Procédé selon la revendication 13, comprenant une étape de lissage (60) utilisant le circuit de traitement (12) pour effectuer, entre les limites opposées de la zone commune (20), une somme des pixels de chacune des images d'entrée (P1, P2) dans laquelle :

- une première pondération en arctangente, fonction de l'éloignement à la bordure de la zone commune sur la première image d'entrée (P1), est appliquée à la moitié du second ensemble de pixels qui est issue de la première image (P1) ;
- une seconde pondération en arctangente, de croissance inversée par rapport à la première pondération, et fonction de l'éloignement à la bordure de la zone commune sur la seconde image d'entrée (P2), est appliquée à la moitié du second ensemble de pixels qui est issue de la seconde image (P2).

**18.** Procédé selon une des revendications 1 à 17, dans lequel l'étape (6) d'assemblage comporte :

- une étape de calcul, pour chacune des zones de recouvrement de la première image d'entrée (P1) et de la seconde image d'entrée (P2), d'un opérateur d'égalisation d'histogramme respectif T1, T2 ;
- une étape de correction d'un paramètre de luminance des pixels dans la seconde image (P2), en appliquant à un histogramme associé à la seconde image (P2) la transformation $T1^{-1}$ o $T2$.

**19.** Procédé selon une des revendications 3 à 18, dans lequel au moins une desdites première et seconde images d'entrée (P1, P2) est elle-même définie par des pixels transformés obtenus lors d'une étape (56) de correction de perspective ayant permis de traiter deux images se recouvrant partiellement..

**20.** Procédé selon une des revendications 1 à 19, dans lequel le système (1) de reconstruction panoramique automatique est intégré dans un terminal radio mobile de format de poche.

**21.** Système (1) de reconstruction panoramique automatique incluant un module (10) d'appariement d'images numériques et un circuit de traitement (12) pour transformer des données représentatives d'images d'entrée (21, 22) et fabriquer des données représentatives d'images de sortie (3), le module (10) d'appariement comprenant des moyens de sélection d'images d'entrée et des moyens de sélection de zones d'image, le circuit de traitement (12) comportant :

- des moyens pour déterminer dans la zone commune (20) des paires de pixels significatifs en correspondance sur chacune des deux images d'entrée (P1, P2), les pixels d'une paire de coordonnées de position respectives xl, yl et xk, yk, représentant un même détail visuel dans la zone commune ;
- un premier module de calcul (121) pour déterminer notamment une première matrice (M1) de transformation à appliquer au moins à la zone commune (20), le premier module de calcul (121) étant doté de moyens logiciels pour :

∘ a) déterminer une focale ;
∘ b) déterminer, à partir de coordonnées de position xl, yl et xk, yk des pixels significatifs appariés et de la focale, une première matrice intermédiaire (M) solution du système d'équations :

$$\begin{bmatrix} xl \\ yl \\ 1 \end{bmatrix} = M \begin{bmatrix} xk \\ yk \\ 1 \end{bmatrix}.$$

où M = $V_k R_k R_l^{-1} V_l^{-1}$, $R_k$ et $R_l$ étant des matrices de rotation 3*3 dépendant de 3 angles de rotation et V dépendant de la focale ;

◦ c) estimer un critère d'erreur représentatif de différences calculées pour les pixels significatifs appariés entre des coordonnées déduites à l'aide de la première matrice intermédiaire (M) et des coordonnées du pixel apparié ;

◦ d) modifier la rotation par incrémentation de $R_k R_l^{-1}$ ;

◦ e) itérer les traitements b), c) et d) jusqu'à ce que le critère d'erreur soit minimisé pour obtenir une matrice intermédiaire optimisée (M') ;

- un second module de calcul (122) en liaison avec le premier module de calcul (121) pour traiter des données de correction de perspective en ajoutant à chacun des pixels significatifs appariés une composante additionnelle de profondeur zk, zl, le second module de calcul (122) étant doté de moyens logiciels pour :

◦ i) déterminer préalablement une valeur de composante zk, zl pour chacun des pixels significatifs appariés qui minimise ledit critère d'erreur en utilisant la matrice intermédiaire optimisée (M') ;

◦ ii) déterminer, à partir de coordonnées de position xl, yl, zl et xk, yk, zk des pixels significatifs appariés et de la focale, une seconde matrice intermédiaire Mp solution du système d'équations :

$$\begin{bmatrix} xl \\ yl \\ zl \end{bmatrix} = Mp \begin{bmatrix} xk \\ yk \\ zk \end{bmatrix}$$

où la seconde matrice intermédiaire est du même type que la première matrice intermédiaire (M) ;

◦ iii) estimer ledit critère d'erreur ;

◦ iv) modifier la rotation ;

◦ v) itérer les traitements ii), iii) et iv) jusqu'à ce que le critère d'erreur soit minimisé pour obtenir une matrice optimisée, formant une première matrice (M1) de transformation, ainsi que des indications de profondeurs zk, zl ;

- des moyens (125) d'assemblage pour calculer une projection sur une portion d'un cylindre, de pixels obtenus par utilisation de la première matrice (M1) de transformation ;

le premier module de calcul (121) étant agencé pour déterminer une seconde matrice (M2) de transformation à appliquer au moins au reste des images d'entrée (P1, P2), le second module de calcul (122) comprenant des moyens pour déterminer dans la zone commune (20) un arrière-plan (AP) dans lequel les pixels ont des valeurs supérieures à 1 pour la composante additionnelle de profondeur zk, zl..

**22.** Système (1) de reconstruction panoramique automatique selon la revendication 21, dans lequel le second module de calcul (122) comprend :

des moyens d'itération des traitements ii) à v) en utilisant les valeurs de composante zk, zl obtenues au traitement v) uniquement pour les pixels significatifs appariés dudit arrière-plan (AP), pour obtenir la seconde matrice (M2) de transformation.

**Patentansprüche**

**1.** Verfahren zur automatischen Panoramarekonstruktion eines Ausgabebilds, das sich aus Pixeln zusammensetzt, aus mindestens zwei digitalen Eingabebildern (P1, P2), die einander zumindest zum Teil überlappen, wobei das Verfahren durch ein System (1) zur automatischen Panoramarekonstruktion umgesetzt wird, das ein Modul (10) zum Paaren von digitalen Bildern und eine Verarbeitungsschaltung (12) zum Transformieren von Daten, die Eingabebilder (21, 22) darstellen, und Erzeugen von Daten, die Ausgabebilder (3) darstellen, beinhaltet, wobei das Verfahren einen Schritt (51) zur Auswahl einer gemeinsamen Zone (20) der Überlappung zwischen zwei Eingabebildern (P1, P2) umfasst, in dem durch das Modul (10) zum Paaren von digitalen Bildern aus Daten (21, 22), die zwei Eingabebilder (P1, P2) darstellen, zwei Arbeitsdatensätze (211, 212), die jeweilige Überlappungszonen darstellen, ausgewählt werden, wobei auf den Auswahlschritt (51) ein Schritt (500) zur Bestimmung von Paaren von signifikanten Pixeln, die in jedem der zwei Eingabebilder (P1, P2) übereinstimmen, in der gemeinsamen Zone (20) folgt, wobei die Pixel eines Paars von jeweiligen Positionskoordinaten xl, yl und xk, yk ein gleiches optisches Detail in der gemeinsamen Zone (20) darstellen, wobei das Verfahren einen Berechnungsschritt (550) umfasst, der die Verarbeitungsschaltung (12) verwendet, um:

- zu einem ersten Zeitpunkt mindestens eine Transformation vom Matrixtyp zwischen den zwei Eingabebildern (P1, P2) zu bestimmen und eine Brennweite im Hinblick auf die Wiederverbindung zu bestimmen, wobei die jeweiligen Positionskoordinaten xl, yl und xk, yk von der Verarbeitungsschaltung (12) dazu verwendet werden, die Transformation vom Matrixtyp zu bestimmen;

- zu einem zweiten Zeitpunkt während eines Perspektivenkorrekturschritts (56) eine Korrektur von Perspektivenfehlern durchzuführen, indem eine Tiefenkomponente für jedes der Paare von signifikanten Pixeln berücksichtigt und die Transformation vom Matrixtyp erneut bestimmt wird;

wobei das Verfahren außerdem einen Zusammenfügungsschritt (6) durch ein Wiederverbinden vom zylindrischen Typ nach der Wiederherstellung einer Menge von Pixeln, die eine Überlagerung von Eingabebildern darstellen, umfasst, wobei die Überlagerung von der Transformation vom Matrixtyp, die während des Berechnungsschritts (550) bestimmt wurde, abgeleitet wird,

wobei der Berechnungsschritt (550) die Verarbeitungsschaltung (12) dazu verwendet, insbesondere eine erste Transformationsmatrix (M1) zu bestimmen, die mindestens auf die gemeinsame Zone (20) angewendet werden soll, und zudem eine Bestimmung einer zweiten Transformationsmatrix (M2), die mindestens auf den Rest der Eingabebilder (P1, P2) angewendet werden soll, durch die Verarbeitungsschaltung (12) umfasst,

wobei der Perspektivenkorrekturschritt (56) einen Schritt des Hinzufügens einer zusätzlichen Tiefenkomponente zk, zl zu jedem der gepaarten signifikanten Pixel und einen Schritt (561) zur Bestimmung eines Hintergrunds (HG) in der gemeinsamen Zone (20), in dem die Pixel Werte von mehr als 1 haben, für die zusätzliche Tiefenkomponente zk, zl umfasst.

2. Verfahren nach Anspruch 1, in dem ein Schritt zur Korrektur von Übergangsfehlern insbesondere in der gemeinsamen Zone (20) durch die Verarbeitungsschaltung (12) durchgeführt wird.

3. Verfahren nach Anspruch 1 oder 2, in dem der Berechnungsschritt (550) Folgendes umfasst:

- a) einen vorherigen Schritt zur Bestimmung einer Brennweite;
- b) einen Schritt zur Bestimmung einer ersten Zwischenmatrix (M) aus den Positionskoordinaten xl, yl und xk, yk von gepaarten signifikanten Pixeln und der Brennweite unter Lösung des folgenden Gleichungssystems:

$$\begin{pmatrix} xl \\ yl \\ l \end{pmatrix} = M \begin{pmatrix} xk \\ yk \\ l \end{pmatrix} ,$$

wobei $M = V_k R_k R_l^{-1} V_l^{-1}$, wobei $R_k$ und $R_l$ 3x3-Drehungsmatrizen sind, die von 3 Drehwinkeln abhängen, und V von der Brennweite abhängt;

- c) einen Schritt zur Schätzung eines Fehlerkriteriums, das Unterschiede, die für die gepaarten signifikanten Pixel berechnet wurden, zwischen Koordinaten, die mithilfe der Zwischenmatrix (M) abgeleitet wurden, und Koordinaten des gepaarten Pixels darstellt;
- d) einen Schritt zur Modifizierung der Drehung durch Erhöhung von $R_k R_l^{-1}$;
- e) einen Schritt zur Iteration der Schritte b), c) und d), bis das Fehlerkriterium minimiert ist, um eine optimierte Zwischenmatrix (M') zu erhalten.

4. Verfahren nach Anspruch 3, in dem der Perspektivenkorrekturschritt Folgendes umfasst:

- i) einen Schritt zur vorherigen Bestimmung eines Werts der Komponente zk, zl für jedes der gepaarten signifikanten Pixel, der das Fehlerkriterium minimiert, indem die optimierte Zwischenmatrix (M') verwendet wird;
- ii) einen Schritt zur Bestimmung einer zweiten Zwischenmatrix Mp aus den Positionskoordinaten xl, yl, zl und xk, yk, zk von gepaarten signifikanten Pixeln und der Brennweite unter Lösung des folgenden Gleichungssystems:

$$\begin{pmatrix} xl \\ yl \\ zl \end{pmatrix} = Mp \begin{pmatrix} xk \\ yk \\ zk \end{pmatrix},$$

wobei die zweite Zwischenmatrix vom selben Typ wie die erste Zwischenmatrix (M) ist;
- iii) einen Schritt zur Schätzung des Fehlerkriteriums;
- iv) einen Schritt zur Modifizierung der Drehung;
- v) einen Schritt zur Iteration der Schritte ii), iii) und iv), bis das Fehlerkriterium minimiert ist, um eine optimierte Matrix, die die erste Transformationsmatrix (M1) bildet, sowie Angaben zu den Tiefen zk, zl zu erhalten; wobei das Verfahren zudem einen Zusammenfügungsschritt (6) umfasst, der eine Projektion von durch Verwendung der ersten Transformationsmatrix (M1) erhaltenen Pixeln auf einen Teil eines Zylinders beinhaltet.

5. Verfahren nach Anspruch 4, in dem der Perspektivenkorrekturschritt (56) Folgendes umfasst:

- einen Schritt (562) zur Iteration der Schritte ii) bis v), indem die Werte der Komponenten zk, zl, die im Schritt v) erhalten wurden, ausschließlich für die gepaarten signifikanten Pixel des Hintergrunds (HG) verwendet werden, um die zweite Transformationsmatrix (M2) zu erhalten.

6. Verfahren nach einem der Ansprüche 1 bis 5, das einen Schritt (510) zur Berechnung einer Information zu Verschiebungen zwischen den zwei Eingabebildern (P1, P2) umfasst, der von der Verarbeitungsschaltung (12) nach dem Auswahlschritt (51) durchgeführt wird, wobei der Schritt (500) zur Bestimmung von Paaren von signifikanten Pixeln Folgendes umfasst:

- einen Schritt (52) zur Aufteilung der gemeinsamen Zone (20) in komplementäre Unterzonen (4) durch eine Verarbeitung des ersten Arbeitsdatensatzes (211);
- einen ersten Schritt (53) zur Erfassung einer ersten Reihe von in den Unterzonen (4) aufgeteilten signifikanten Pixeln in dem ersten Bild (P1) in der gemeinsamen Zone (20) und einen zweiten Schritt (54) zur Erfassung einer zweiten Reihe von signifikanten Pixeln, die mit der ersten Reihe übereinstimmt, in dem zweiten Bild (P2), wobei der zweite Erfassungsschritt (54) eine Lokalisierung von Unterzonen des zweiten Bilds (P2) durch Verwendung der Verschiebungsinformation durch die Verarbeitungsschaltung (12) beinhaltet.

7. Verfahren nach Anspruch 6, in dem der Schritt (52) zur Aufteilung in Unterzonen (4) eine Verarbeitung des ersten Arbeitsdatensatzes (211) durch die Verarbeitungsschaltung (12) umfasst, um Untergruppen von Arbeitsdaten, die die Unterzonen (4) der gemeinsamen Zone (20) darstellen, aufzuteilen.

8. Verfahren nach Anspruch 7, in dem der erste Erfassungsschritt (53) eine Auswahl von charakteristischen Daten eines signifikanten Pixels in jeder Untergruppe von Arbeitsdaten in Abhängigkeit von Ergebnissen, die von einem Harris-Detektor-Modul vom Vermittlungstyp geliefert werden, umfasst, um einen Lichtstärkegradienten in der Umgebung eines Pixels eines digitalen Bilds zu schätzen.

9. Verfahren nach einem der Ansprüche 3 bis 8, in dem das während des Schätzungsschritts c) geschätzte Fehlerkriterium vom quadratischen Typ ist.

10. Verfahren nach einem der Ansprüche 6 bis 9, in dem der Schritt (510) zur Berechnung einer Verschiebungsinformation eine Phasenkorrelationsmethode umfasst, die eine Verarbeitung von ersten und zweiten Arbeitsdatensätzen (211, 212) durch ein Durchlaufen der Fourier-Domäne, um eine Korrelationsmatrix zu bestimmen, und dann eine Rückkehr in die Raumdomäne von Bildern, um eine Korrelationsspitze zu bestimmen, beinhaltet.

11. Verfahren nach Anspruch 10, in dem der Schritt (510) zur Berechnung einer Verschiebungsinformation die folgenden Schritte umfasst, die von der Verarbeitungsschaltung (12) ausgeführt werden:

- eine erste Fourier-Transformation, die für Daten von Pixeln des ersten Arbeitsdatensatzes (211), die dem ersten Eingabebild (P1) entsprechen, durchgeführt werden;
- eine zweite Fourier-Transformation, die zu der ersten Fourier-Transformation identisch ist und die für Daten von Pixeln des zweiten Arbeitsdatensatzes (212), die dem zweiten Eingabebild (P2) entsprechen, durchgeführt werden;

- eine Phasenkorrelationsberechnung, um komplexe Zahlen zu bestimmen, die jeweils einer Pixelposition in der gemeinsamen Zone (20) entsprechen und durch Verwendung von jeweils zwei Fourier-Koeffizienten erhalten werden, die während der ersten und der zweiten Fourier-Transformation erhalten wurden;

- eine Harmonisierung aller Module komplexer Zahlen, die mit ein und demselben bestimmten Wert erhalten wurden;

- eine inverse Fourier-Transformation aus den komplexen Zahlen, deren Modul harmonisiert wurde, um eine Tabelle reeller Zahlen zu erhalten;

- eine Erfassung der höchsten reellen Zahl, um die Verschiebung zwischen den Zonen der Überlappung von Eingabebildern (P1, P2) aus mit dieser Zahl assoziierten Positionskoordinaten zu bestimmen.

**12.** Verfahren nach einem der Ansprüche 6 bis 11, in dem signifikante Pixel im ersten Erfassungsschritt (53) während eines Vergleichsschritts (530) ausgewählt werden, der von der Verarbeitungsschaltung (12) durchgeführt wird und eine 2x2-Berechnungsmatrix verwendet, die Lichtstärkecharakteristika in der Umgebung eines Pixels darstellt und eine eventuelle Konvolution durch einen Gaußschen Filter berücksichtigt, wobei der Vergleichsschritt (530) das Bestimmen ermöglicht, ob die Berechnungsmatrix über zwei Eigenwerte verfügt, die jeweils höher als ein bestimmter Grenzwert sind.

**13.** Verfahren nach Anspruch 12, in dem der zweite Erfassungsschritt (54) nach der Lokalisierung von Unterzonen des zweiten Bilds (P2) für jedes zu paarende signifikante Pixel mindestens einen Schritt zur erneuten Bestimmung der Verschiebung mittels einer Phasenkorrelationsmethode umfasst, um eine Lokalisierung des zu paarenden Pixels in einem rechteckigen Fenster (8) zu schätzen, das Abmessungen aufweist, die kleiner als die der entsprechenden Unterzone sind, und ein Pixel flankiert, das mithilfe der erneut bestimmten Verschiebung abgeleitet wurde, wobei der Schritt der erneuten Bestimmung der Verschiebung bis zum Erzielen einer Stabilität der Verschiebung, die das Bestimmen der Position des zu paarenden Pixels ermöglicht, wiederholt wird.

**14.** Verfahren nach Anspruch 13, in dem ein während des ersten Erfassungsschritts (53) erfasstes signifikantes Pixel eliminiert wird, wenn ein Schritt zur erneuten Bestimmung der Verschiebung im zweiten Erfassungsschritt (54) eine Verschiebungsvariation offenbart, die höher als ein Verschiebungsgrenzwert ist.

**15.** Verfahren nach einem der Ansprüche 3 bis 14, in dem der vorherige Schritt a) zur Bestimmung der Brennweite Folgendes umfasst:

- einen Schritt zur Festlegung der Brennweite auf einen Anfangswert;
- einen Schritt zur Bestimmung der Matrix $M = V_k R_k R_l^{-1} V_l^{-1}$ ;
- eine Iteration der zwei vorhergehenden Schritte, indem die Brennweite bis zum Minimieren des Fehlerkriteriums variiert wird.

**16.** Verfahren nach einem der Ansprüche 1 bis 12, in dem der Zusammenfügungsschritt (6) eine Projektion der drei folgenden Mengen von Pixeln auf einen Teil eines Zylinders, der aus einer bestimmten Zahl von Pixeln besteht, umfasst;

- eine erste Menge von Pixeln des ersten Bilds (P1), die sich von der gemeinsamen Zone (20) unterscheidet;
- eine zweite Menge von Pixeln, die der gemeinsamen Zone (20) entspricht, des ersten Bilds (P1) bzw. des zweiten Bilds (P2) wobei die Pixel der zweiten Menge durch Verwendung der ersten Transformationsmatrix (M1) erhalten werden; und
- eine dritte Menge von Pixeln des zweiten Bilds (P2), die sich von der gemeinsamen Zone (20) unterscheidet, wobei die Pixel der dritten Menge durch Verwendung der zweiten Transformationsmatrix (M2) erhalten werden.

**17.** Verfahren nach Anspruch 13, das einen Glättungsschritt (60) umfasst, der die Verarbeitungsschaltung (12) verwendet, um zwischen den entgegengesetzten Grenzen der gemeinsamen Zone (20) eine Summe von Pixeln jedes der Eingabebilder (P1, P2) vorzunehmen, in der:

- eine erste Arkustangens-Gewichtung in Abhängigkeit von dem Abstand vom Rand der gemeinsamen Zone in dem ersten Eingabebild (P1) auf die Hälfte der zweiten Menge von Pixeln, die von dem ersten Bild (P1) ausgeht, angewendet wird;
- eine zweite Arkustangens-Gewichtung mit inversem Wachstum in Bezug auf die erste Gewichtung und in Abhängigkeit von dem Abstand vom Rand der gemeinsamen Zone in dem zweiten Eingabebild (P2) auf die Hälfte der zweiten Menge von Pixeln, die von dem zweiten Bild (P2) ausgeht, angewendet wird.

18. Verfahren nach einem der Ansprüche 1 bis 17, in dem der Zusammenfügungsschritt (6) Folgendes umfasst:

    - einen Schritt zur Berechnung eines Operators zum Ausgleich eines jeweiligen Histogramms T1, T2 für jede der Zonen der Überlappung des ersten Eingabebilds (P1) und des zweiten Eingabebilds (P2);
    - einen Schritt zur Korrektur eines Parameters der Leuchtdichte von Pixeln in dem zweiten Bild (P2), indem die Transformation T1$^{-1}$ o T2 auf ein mit dem zweiten Bild (P2) assoziiertes Histogramm angewendet wird.

19. Verfahren nach einem der Ansprüche 3 bis 18, in dem mindestens eines des ersten und des zweiten Eingabebilds (P1, P2) selbst durch transformierte Pixel definiert ist, die während eines Perspektivenkorrekturschritts (56) erhalten wurden, wodurch das Verarbeiten von zwei sich zum Teil überlappenden Bildern ermöglicht wird.

20. Verfahren nach einem der Ansprüche 1 bis 19, in dem das System (1) zur automatischen Panoramarekonstruktion in ein Mobilfunkendgerät im Taschenformat integriert ist.

21. System (1) zur automatischen Panoramarekonstruktion, das ein Modul (10) zum Paaren von digitalen Bildern und eine Verarbeitungsschaltung (12) zum Transformieren von Daten, die Eingabebilder (21, 22) darstellen, und Erzeugen von Daten, die Ausgabebilder (3) darstellen, beinhaltet, wobei das Paarungsmodul (10) Mittel zur Auswahl von Eingabebildern und Mittel zur Auswahl von Bildzonen umfasst, wobei die Verarbeitungsschaltung (12) Folgendes umfasst:

    - Mittel zum Bestimmen von Paaren von signifikanten Pixeln, die in jedem der zwei Eingabebilder (P1, P2) übereinstimmen, in der gemeinsamen Zone (20), wobei die Pixel eines Paars von jeweiligen Positionskoordinaten xl, yl und xk, yk ein gleiches optisches Detail in der gemeinsamen Zone (20) darstellen;
    - ein erstes Berechnungsmodul (121) zum Bestimmen von insbesondere einer ersten Transformationsmatrix (M1), die mindestens auf die gemeinsame Zone (20) angewendet werden soll, wobei das erste Berechnungsmodul (121) mit Softwaremitteln ausgestattet ist, um:

        ◦ a) eine Brennweite zu bestimmen;
        ◦ b) eine erste Zwischenmatrix (M) aus den Positionskoordinaten xl, yl und xk, yk von gepaarten signifikanten Pixeln und der Brennweite unter Lösung des folgenden Gleichungssystems zu bestimmen:

$$\begin{pmatrix} xl \\ yl \\ l \end{pmatrix} = M \begin{pmatrix} xk \\ yk \\ l \end{pmatrix} ,$$

    wobei $M = V_k R_k R_l^{-1} V_l^{-1}$, wobei $R_k$ und $R_l$ 3x3-Drehungsmatrizen sind, die von 3 Drehwinkeln abhängen, und V von der Brennweite abhängt;
        ◦ c) ein Fehlerkriterium zu schätzen, das Unterschiede, die für die gepaarten signifikanten Pixel berechnet wurden, zwischen Koordinaten, die mithilfe der Zwischenmatrix (M) abgeleitet wurden, und Koordinaten des gepaarten Pixels darstellt;
        ◦ d) die Drehung durch Erhöhung von $R_k R_l^{-1}$ zu modifizieren;
        ◦ e) die Verarbeitungen b), c) und d) zu iterieren, bis das Fehlerkriterium minimiert ist, um eine optimierte Zwischenmatrix, (M') zu erhalten;

    - ein zweites Berechnungsmodul (122) in Verbindung mit dem ersten Berechnungsmodul (121) zum Verarbeiten von Perspektivenkorrekturdaten, indem eine zusätzliche Tiefenkomponente zk, zl zu jedem der gepaarten signifikanten Pixel hinzugefügt wird, wobei das zweite Berechnungsmodul (122) mit Softwaremitteln ausgestattet ist, um:

        ◦ i) vorher einen Wert der Komponente zk, zl für jedes der gepaarten signifikanten Pixel zu bestimmen, der das Fehlerkriterium minimiert, indem die optimierte Zwischenmatrix (M') verwendet wird;
        ◦ ii) eine zweite Zwischenmatrix Mp aus den Positionskoordinaten xl, yl, zl und xk, yk, zk von gepaarten signifikanten Pixeln und der Brennweite unter Lösung des folgenden Gleichungssystems:

$$\begin{pmatrix} xl \\ yl \\ zl \end{pmatrix} = Mp \begin{pmatrix} xk \\ yk \\ zk \end{pmatrix},$$

wobei die zweite Zwischenmatrix vom selben Typ wie die erste Zwischenmatrix (M) ist;
∘ iii) das Fehlerkriterium zu schätzen;
∘ iv) die Drehung zu modifizieren;
∘ v) die Verarbeitungen ii), iii) und iv) zu iterieren, bis das Fehlerkriterium minimiert ist, um eine optimierte Matrix, die die erste Transformationsmatrix (M1) bildet, sowie Angaben zu den Tiefen zk, zl zu erhalten;

- Zusammenfügungsmittel (125) zum Berechnen einer Projektion von durch Verwendung der ersten Transformationsmatrix (M1) erhaltenen Pixeln auf einen Teil eines Zylinders;
wobei das erste Berechnungsmodul (121) dazu eingerichtet ist, eine zweite Transformationsmatrix (M2) zu bestimmen, die mindestens auf den Rest der Eingabebilder (P1, P2) angewendet werden soll, wobei das zweite Berechnungsmodul (122) Mittel zum Bestimmen eines Hintergrunds (HG) in der gemeinsamen Zone (20), in dem die Pixel Werte von mehr als 1 haben, für die zusätzliche Tiefenkomponente zk, zl umfasst.

22. System (1) zur automatischen Panoramarekonstruktion nach Anspruch 21, in dem das zweite Berechnungsmodul (122) Folgendes umfasst:

Mittel zur Iteration der Verarbeitungen ii) bis v), indem die Werte der Komponenten zk, zl, die in der Verarbeitung v) erhalten wurden, ausschließlich für die gepaarten signifikanten Pixel des Hintergrunds (HG) verwendet werden, um die zweite Transformationsmatrix (M2) zu erhalten.

**Claims**

1. Method for automatic panoramic reconstruction of an output image composed of pixels from at least two at least partially overlapping digital input images (P1, P2), implemented by a system (1) for automatic panoramic reconstruction including a module (10) for pairing digital images and a processing circuit (12) for transforming data representative of input images (21, 22) and producing data representative of output images (3), including a step (51) for selection of a common zone (20) of overlap between two input images (P1, P2) from which, by virtue of the module (10) for pairing digital images, among the data (21,22) representative of the two input images (P1, P2), two series of working data (211, 212) representative of the respective overlapping zones are selected, the selection step (51) being followed by a step (500) for determining in the common zone (20) corresponding pairs of significant pixels on each of the two input images (P1, P2), the pixels of a pair of respective position coordinates xl, yl and xk, yk representing a same visual detail in the common zone (20), the method comprising a calculation step (550) using the processing circuit (12) in order:

- firstly, to determine at least one transformation of matrix type between the two input images (P1, P2) and determine a focal length with a view to rebonding, said respective position coordinates xl, yl and xk, yk being used by the processing circuit (12) to determine the transformation of matrix type;
- secondly, in a perspective correction step (56), to carry out a correction of perspective errors by taking account of a depth component for each of the pairs of significant pixels and redetermining said transformation of matrix type;
the method also comprising an assembling step (6) by a cylindrical type rebonding after recovery of a set of pixels representative of an overlay of the input images, said overlay being deduced from the transformation of matrix type determined in said calculation step (550), the calculation step (550) using the processing circuit (12) in order to determine notably a first transformation matrix (M1) to be applied at least to the common zone (20) and comprising in addition a determination by the processing circuit (12) of a second transformation matrix (M2) to be applied at least to the remainder of the input images (P1, P2),
the perspective correction step (56) comprising a step for addition to each of the paired significant pixels of an additional depth component zk, zl and a step (561) for determining in the common zone (20) a background (AP) in which the pixels have values greater than 1 for the additional depth component zk, zl.

**2.** Method according to claim 1, in which a step for correction of transition errors is carried out notably in the common zone (20) by the processing circuit (12).

**3.** Method according to claim 1 or 2, in which the calculation step (550) comprises:

- a) a prior step for determination of a focal length;
- b) a step for determination, from position coordinates xl, yl and xk, yk of the paired significant pixels and the focal length, of a first intermediate matrix (M) solution of the system of equations:

$$\begin{pmatrix} xl \\ yl \\ 1 \end{pmatrix} = M \begin{pmatrix} xk \\ yk \\ 1 \end{pmatrix},$$

in which $M = V_k R_k R_l^{-1} V_l^{-1}$, $R_k$ and $R_l$ being 3*3 rotation matrices depending on 3 angles of rotation and V depending on the focal length;
- c) a step for estimation of an error criterion representative of differences calculated for the paired significant pixels between coordinates deduced with the aid of the intermediate matrix (M) and coordinates of the paired pixel;
- d) a step for modification of the rotation by incrementation of $R_k R_l^{-1}$;
- e) a step for iteration of the steps b), c) and d) until the error criterion is minimised in order to obtain an optimised intermediate matrix (M').

**4.** Method according to claim 3, in which the perspective correction step comprises:

- i) a step for prior determination of a value for component zk, zl for each of the paired significant pixels which minimises said error criterion by using the optimised intermediate matrix (M');
- ii) a step for determination, from position coordinates xl, yl, zl and xk, yk, zk of the paired significant pixels and the focal length, of a second intermediate matrix Mp solution of the system of equations:

$$\begin{pmatrix} xl \\ yl \\ zl \end{pmatrix} = Mp \begin{pmatrix} xk \\ yk \\ zk \end{pmatrix},$$

in which the second intermediate matrix is of the same type as the first intermediate matrix (M);
- iii) a step for estimation of said error criterion;
- iv) a step for modification of the rotation;
- v) a step for iteration of the steps ii), iii) and iv) until the error criterion is minimised in order to obtain an optimised matrix, forming said first transformation matrix (M1), as well as indications of depths zk, zl;
the method additionally comprising an assembling step (6) including a projection, on a portion of a cylinder, of pixels obtained by use of the first transformation matrix (M1).

**5.** Method according to claim 4, in which the perspective correction step (56) comprises:

- a step (562) for iteration of the steps ii) to v) using the values for component zk, zl obtained in step v) solely for the paired significant pixels of said background (AP), in order to obtain the second transformation matrix (M2).

**6.** Method according to one of claims 1 to 5, comprising a step (510) for calculation of offset information between the two input images (P1, P2) produced by the processing circuit (12) after the selection step (51), said step (500) for determination of pairs of significant pixels comprising:

- a step (52) for division of the common zone (20) into complementary sub-zones (4) by a processing of the first series of working data (211);
- a first step (53) for detection on the first image (P1), in the common zone (20), of a first series of significant pixels divided in the sub-zones (4) and a second step (54) for detection on the second image (P2) of a second series of significant pixels corresponding with said first series, the second detection step (54) including a location by the processing circuit (12) of sub-zones of the second image (P2) by using the offset information.

7. Method according to claim 6, in which the step (52) for division into sub-zones (4) comprises a processing of the first series of working data (211) by the processing circuit (12) in order to divide sub-groups of working data representative of the sub-zones (4) of the common zone (20).

8. Method according to claim 7, in which the first detection step (53) comprises a selection, from each working data sub-group, of data characteristic of a significant pixel, as a function of results supplied by a Harris detector module of the type arranged to estimate a luminous intensity gradient in the vicinity of a pixel of a digital image.

9. Method according to one of claims 3 to 8, in which the error criterion estimated during the estimating step c) is of quadratic type.

10. Method according to one of claims 6 to 9, in which the step (510) for calculation of offset information comprises a phase correlation method including a processing of the first and second series of working data (211, 212) by switching to the Fourier domain to determine a correlation matrix then returning to the spatial domain of the images to determine a correlation peak.

11. Method according to claim 10, in which the step (510) for calculation of offset information comprises the following steps effected by the processing circuit (12) :

- a first Fourier transformation carried out for data of pixels of the first series of working data (211) corresponding to the first input image (P1);
- a second Fourier transformation identical to the first Fourier transformation, carried out for data of pixels of the second series of working data (212) corresponding to the second input image (P2);
- a phase correlation calculation to determine complex numbers each corresponding to a pixel position in the common zone (20) and obtained by use two by two of the Fourier coefficients obtained during said first and second Fourier transformations;
- a harmonisation of all the moduli of the complex numbers obtained with a same given value;
- an inverse Fourier transformation from the complex numbers with their module harmonised in order to obtain a table of real numbers;
- a detection of the highest real number in order to determine, from position coordinates associated with this number, the offset between the zones of overlap of the input images (P1, P2).

12. Method according to one of claims 6 to 11, in which significant pixels are selected during the first detection step (53) during a comparison step (530) carried out by the processing circuit (12) and using a 2*2 calculation matrix, representative of characteristics of luminous intensity in the vicinity of a pixel and taking account of any convolution by a Gaussian filter, the comparison step (530) making it possible to determine whether the calculation matrix has two eigenvalues each greater than a given threshold.

13. Method according to claim 12, in which the second detection step (54) comprises, after the location of the sub-zones of the second image (P2), for each significant pixel to be paired, at least one step for redetermination of the offset by means of a phase correlation method in order to estimate a location for the pixel to be paired in a rectangular window (8) with dimensions less than those of the corresponding sub-zone and recentered around a pixel deduced with the aid of the redetermined offset, the step for redetermination of the offset being repeated until a stable offset is obtained making it possible to determine the position of the pixel to be paired.

14. Method according to claim 13, in which a significant pixel detected during the first detection step (53) is eliminated if a step for redetermination of the offset reveals a variation in offset greater than an offset threshold during the second detection step (54).

15. Method according to one of claims 3 to 14, in which the step a) for prior determination of the focal length comprises:

- a step for setting the focal length to an initial value;
- a step for determining the matrix $M = V_k R_k R_l^{-1} V_l^{-1}$;
- an iteration of the two preceding steps while varying the focal length until the error criterion is minimised.

16. Method according to one of claims 1 to 12, in which the assembling step (6) comprises a projection, onto a portion of a cylinder constituted by a given number of pixels, of three sets of pixels:

- a first set of pixels from the first image (P1) distinct from the common zone (20);
- a second set of pixels corresponding to the common zone (20) respectively from the first image (P1) and the second image (P2), the pixels of the second set being obtained by use of the first transformation matrix (M1); and
- a third set of pixels from distinct from the second image (P2) distinct from the common zone (20), the pixels of the third set being obtained by use of the second transformation matrix (M2).

17. Method according to claim 13, comprising a smoothing step (60) using the processing circuit (12) to effect, between the opposing limits of the common zone (20), a sum of the pixels of each of the input images (P1, P2) in which:

- a first arctangent weighting, as a function of the distance to the edge of the common zone on the first input image (P1), is applied to the half of the second set of pixels obtained from the first image (P1);
- a second arctangent weighting, of inverse growth in relation to the first weighting, and as a function of the distance to the edge of the common zone on the second input image (P2), is applied to the half of the set of pixels which arises from the second image (P2).

18. Method according to one of claims 1 to 17, in which the assembling step (6) comprises:

- a step for calculation, for each of the zones of overlap of the first input image (P1) and the second input image (P2), of a respective histogram equalization operator T1, T2;
- a step for correction of a luminance parameter of the pixels in the second image (P2), by applying the transformation $T1^{-1}$ o T2 to a histogram associated with the second image (P2).

19. Method according to one of claims 3 to 18, in which at least one of the said first and second input images (P1, P2) is itself defined by transformed pixels obtained during a perspective correction step (56) having allowed two partially overlapping images to be processed.

20. Method according to one of claims 1 to 19, in which the system (1) for automatic panoramic reconstruction is integrated in a pocket size mobile radio terminal.

21. System (1) for automatic panoramic reconstruction including a module (10) for pairing digital images and a processing circuit (12) for transforming data representative of input images (21, 22) and producing data representative of output images (3), the pairing module (10) comprising means for selection of input images and means for selection of image zones, the processing circuit (12) comprising:

- means for determining in the common zone (20) of the pairs of corresponding significant pixels on each of the two input images (P1, P2), the pixels of a pair of respective position coordinates xl, yl and xk, yk representing a same visual detail in the common zone;
- a first calculation module (121) for determining notably a first transformation matrix (M1) to be applied at least to the common zone (20), the first calculation module (121) being provided with software means in order to:

  ○ a) determine a focal length;
  ○ b) determine, from position coordinates xl, yl and xk, yk of the paired significant pixels and the focal length, a first intermediate matrix (M) solution of the system of equations:

$$\begin{pmatrix} xl \\ yl \\ 1 \end{pmatrix} = M \begin{pmatrix} xk \\ yk \\ 1 \end{pmatrix},$$

in which $M = V_k R_k R_l^{-1} V_l^{-1}$, $R_k$ and $R_l$ being 3*3 rotation matrices depending on 3 angles of rotation and V depending on the focal length;
  ○ c) estimate an error criterion representative of calculated differences for the paired significant pixels between coordinates deduced with the aid of the first intermediate matrix (M) and coordinates of the paired pixel;

◦ d) modify the rotation by incrementation of $R_k R_l^{-1}$;

◦ e) iterate the processing steps b), c) and d) until the error criterion is minimised in order to obtain an optimised intermediate matrix (M');

- a second calculation module (122) linked to the first calculation module (121) in order to process perspective correction data by adding to each of the paired significant pixels an additional depth component zk, zl, the second calculation module (122) being provided with software means in order to:

◦ i) determine first a value for component zk, zl for each of the paired significant pixels which minimises said error criterion by using the optimised intermediate matrix (M');

◦ ii) determine, from position coordinates xl, yl, zl and xk, yk, zk of the paired significant pixels and the focal length, a second intermediate matrix Mp solution of the system of equations:

$$\begin{pmatrix} xl \\ yl \\ zl \end{pmatrix} = Mp \begin{pmatrix} xk \\ yk \\ zk \end{pmatrix} ,$$

in which the second intermediate matrix is of the same type as the first intermediate matrix (M);

◦ iii) estimate said error criterion;

◦ iv) modify the rotation;

◦ v) iterate the processing ii), iii) and iv) until the error criterion is minimised in order to obtain an optimised matrix, forming a first transformation matrix (M1), as well as indications of depths zk, zl;

- assembling means (125) for calculating a projection on a portion of a cylinder, of pixels obtained by use of the first transformation matrix (M1);

the first calculation module (121) being arranged to determine a second transformation matrix (M2) to be applied at least to the remainder of the input images (P1, P2), the second calculation module (122) comprising means for determining in the common zone (20) a background (AP) in which the pixels have values greater than 1 for the additional depth component zk, zl.

22. System (1) for automatic panoramic reconstruction according to claim 21, in which the second calculation module (122) comprises:

means for iteration of the processings ii) to v) using the values of component zk, zl obtained in processing v) solely for the paired significant pixels of said background (AP), in order to obtain the second transformation matrix (M2).

**Fig. 1**

**Fig. 2**

**Fig. 3**

**Fig. 6A**

**Fig. 6B**

Fig. 4

Fig. 5

AP

z > 1

z ~ 1

z < 1

**EP 1 750 227 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6018349 A
- US 6044181 A
- US 6785427 B

**Littérature non-brevet citée dans la description**

- Image mosaicing for tele-reality applications. **SZELISKI R.** Proceedings of the second IEEE Workshop on Sarasota. IEEE Comput Soc, 05 Décembre 1994, 44-53
- **R.N. BRACEWELL.** The Fourier Transforms and Its Applications. McGraw-Hill, 1965